# EUROPÄISCHE PATENTSCHRIFT

(11) **EP 0 448 699 B1**
(45) Veröffentlichungstag und Bekanntmachung des Hinweises auf die Patenterteilung: **22.09.1993**
(21) Anmeldenummer: 90916264.6
(22) Anmeldetag: 17.10.1990
(51) Int. Cl.: F16H 25/20, B23Q 5/34

(54) **SCHRITTANTRIEBSVORRICHTUNG**
STEP-BY-STEP DRIVING MECHANISM
MECANISME D'ENTRAINEMENT PAS A PAS

(30) Priorität: 18.10.1989 DE 8912348 U
(43) Veröffentlichungstag der Anmeldung: 02.10.1991
(73) Patentinhaber: EXPERT Maschinenbau GmbH, D-64653 Lorsch (DE)
(72) Erfinder: MÖLLER, Reinfried, D-6940 Weinheim (DE)
(74) Vertreter: Helber, Friedrich G., Dipl.-Ing.
(86) Internationale Anmeldenummer: EP9001758
(87) Internationale Veröffentlichungsnummer: WO9105964

(56) Entgegenhaltungen:
- EP-A- 146 096
- EP-A- 292 056
- EP-A- 366 594
- DE-A- 3 208 400
- FR-A- 380 115
- FR-A- 547 371
- GB-A- 612 306
- US-A- 1 492 266

## Beschreibung

Die Erfindung betrifft eine Schrittantriebsvorrichtung für den Antrieb von längsverschieblichen Schlitten nach einem vorgegebenen Bewegungsgesetz mit einem dem jeweiligen Schlitten benachbart und mit ihrer Längsmittelachse parallel zur Schlitten-Vorschubrichtung ortsfest, jedoch motorisch drehantreibbar gehalterten langgestreckten Zylinderwalze, in deren zylindrischer Umfangsfläche eine Steuernut mit einem dem gewünschten Bewegungsgesetz des Schlittens ent- sprechenden Windungsverlauf eingearbeitet ist, in welche das freie Ende eines vom Schlitten zur Zylinderwalze vorstehenden Mitnehmerbolzens passend eingreift.

Schrittantriebsvorrichtungen dieser Art werden beispielsweise als Werkstück-Zubringervorrichtungen in der Serienfertigung eingesetzt, wobei ihr besonderer Vorteil darin liegt, daß die Zufuhr der Werkstücke aufgrund der Möglichkeit der Verwendung von Zylinderwalzen mit Steuernuten mit unterschiedlichen Verläufen nicht nur ruck- und stoßfrei erfolgt, sondern diese auch genau positioniert werden. Als Einsatzbeispiel sei das Heranführen von Karosserieteilen und die Halterung dieser Teile in Anlage an der zugeordneten Baugruppe während der Verschweigung durch Schweig-Roboter erwähnt. Solche Schrittantriebsvorrichtungen können aber nicht nur zur Erzeugung von Hin- und Herbewegungen, sondern - durch Koppelung des längsverschieblichen Schlittens mit geeigneten nachgeschalteten Gelenk- oder Zahngetrieben - auch zur Erzeugung von Schwenk- oder überlagerten Bewegungen verwendet werden, wofür als Beispiel der Antrieb von Scheren-Hubtischen (DE-C 32 08 400) oder der Antrieb der Shuttle- oder Förderbalken von sogennanten "Hub-Shuttle-Fördervorrichtungen" (DE-A- 39 03 518.2) erwähnt sei, die in der Praxis zum absatzweisen Transport von in aufeinanderfolgenden Arbeitsstationen zu bearbeitenden Werkstücke in der Serienfabrikation, beispielsweise in der Großserienfertigung von Kraftfahrzeug-Karosserien eingesetzt werden. Wegen der Übertragung der Antriebs-Drehbewegung der Zylinderwalzen über die in ihrer Umfangsfläche eingearbeitete Steuernut auf den am Schlitten vorgesehenen (einzigen) Mitnehmerbolzen sind die in solchen Schrittantriebsvorrichtungen übertragbaren Leistungen zwar sehr hoch, aber doch beschränkt. Bei höheren zu handhabenden Lasten in Scheren-Hubtischen bzw. bei Hub-Shuttle-Vorrichtungen, mit welchen eine große Anzahl von Karosserien jeweils gleichzeitig taktweise von der einen zur anderen Bearbeitungsstation gefördert werden soll, können die zu transportierenden Lasten so hoch sein, daß die von den Wänden der Steuernut auf den Mitnehmerbolzen des Schlittens zu übertragenden Pressungen unzulässig hoch werden, so daß dann die geforderte Lebensdauer nicht erreicht wird. In solchen Fällen erfolgt der Antrieb der jeweiligen Hub- oder Fördervorrichtung mittels zweier gleicher, parallel geschalteter Schrittantriebsvorrichtungen der hier in Frage stehenden Art, was aber einen erheblichen Mehraufwand und eine entsprechende Verteuerung gegenüber dem Antrieb mit einer Schrittantriebsvorrichtung zur Folge hat.

Die Anordnung mehrerer in Umfangsrichtung zueinander versetzter Steuernuten, in welche jeweils ein von einem Schlitten vortretender Mitnehmerbolzen eingreift, ist bei einer Hub-Drehtisch-Vorrichtung bekannt (EP-A-0 146 096), welche zur taktweisen Übernahme von Werkstücken an einer Aufnahmeposition, stoß- und ruckfreien Überführung in eine (oder mehrere) exakt winkelversetzte Bearbeitungsposition(en) und schließlich zum Weitertransport zu einer Abgabeposition, in welche die Werkstücke wieder übernommen und weitertransportiert werden, dient, wobei der getakteten Drehbewegung der Tischplatte eine ebenfalls stoß- und ruckfreie Hubbewegung mit exakter Höhenpositionierung überlagert werden muß. Die bei der bekannten Vorrichtung getroffene Übertragung der zur Erzeugung des senkrechten Hubs des die Werkstückträger haltenden Hubschlittens über einen zwischengeschalteten, mit den in die Stellnuten eingreifenden Mitnehmerbolzen versehenen Indexschlitten dient dort aber zur Erzielung der erforderlichen Genauigkeit der getakteten Dreh-Hubbewegung derart, daß das geforderte exakte Anfahren der Bearbeitungsstationen mit dem Werkstück erreicht wird, wobei die Antriebskräfte in Umfangsrichtung gleichmäßig am Hubschlitten verteilt angreifen müssen, um ein Kippen des Schlittens und somit eine Höhenveränderung der Werkstückträger zu vermeiden.

Der Erfindung liegt demgegenüber die Aufgabe zugrunde. Schrittantriebsvorrichtungen der hier in Frage stehenden Art so weiterzubilden, daß sie zur Übertragung deutlich höherer Leistungen geeignet sind, so daß auch in solchen Fällen, in denen bisher aus Gründen der Leistungsübertragung zwei gleichartige Schrittantriebsvorrichtungen im Parallelbetrieb verwendet werden mußten, nunmehr eine einzige Antriebsvorrichtung verwendbar ist.

Ausgehend von einer Schrittantriebsvorrichtung der eingangs erwähnten Art wird diese Aufgabe erfindungsgemäß dadurch gelöst, daß die Zylinderwalze in einem langgestreckten Gehäuse mit wenigstens zwei auf diametral gegenüberliegenden Seiten der Zylinderwalze angeordneten parallelen Seitenwänden drehbar gelagert ist und auf jeder der beiden parallelen Seitenwände jeweils wenigstens ein Schlitten längsverschieblich geführt gelagert ist, daß in die zylindrische Umfangsfläche der Zylinderwalze in um 180° in Umfangsrichtung versetzer Anordnung wenigstens zwei jeweils einem Schlitten zugeordnete Steuernuten zu gleichem Verlauf eingearbeitet sind, daß an jedem der Schlitten ein zur Zylinderwalze vorstehender und mit seinem freien Ende in die jeweils zugeordnete Steuernut eingreifender Mitnehmerbolzen angeordnet ist, und daß in jeder Seitenwand parallel zur Längsmittelachse der Zylinderwalze ein durchgehender Längsschlitz mit einer wenigstens den Durchmesser des Mitnehmerbolzens entsprechenden Breite vorgesehen ist, wobei die Längsmittelachse der Zylinderwalze und die Längsmittelachsen der in den gegenüberliegenden Gehäuse-Seitenwänden vorgesehenen Längsschlitze in einer Ebene liegen, die ihrerseits rechtwinklig zu den Seitenwänden verläuft. Diese Ausgestaltung des Schrittgetriebes ordnet eine Zylinderwalze also zwei Schlitten mit je einem in eine gesonderte Steuernut eingreifenden Mitnehmerbolzen zu, so daß die übertragbare Leistung praktisch verdoppelt wird. Damit wird eine Antriebsvorrichtung also für solche Fälle verwendbar, in denen bisher zwei gesonderte Schritt-Antriebsvorrichtungen in Parallelschaltung eingesetzt werden mußten. Das Antriebssystem wird also vereinfacht und eine deutliche Platzersparnis erzielt.

Die Zylinderwalze kann in Längsrichtung versetzt auch mit jeweils einem Paar von in Umfangsrichtung um 180° versetzt eingearbeiteten Steuernuten gleichen Verlaufs versehen sein, wobei dann auf jeder der beiden gegenüberliegenden Gehäuse-Seitenwände zwei, jeweils einer der in Längsrichtung versetzten Steuernut zugeordnete Schlitten längsverschieblich geführt gelagert sind. Die Schrittantriebsvorrichtung weist dann also insgesamt vier jeweils mit einem Mitnehmerbolzen in eine gesonderte Steuernut eingreifende Schlitten auf, so daß die übertragbare Leistung weiter erhöht wird.

In vorteilhafter Weiterbildung der Erfindung können dabei die in Längsrichtung versetzten Paare von ihrerseits jeweils um 180° in Umfangsrichtung versetzt eingearbeiteten Steuernuten jeweils entgegengesetzten Windungssinn haben. Die Schlitten werden also bei angetriebener Zylinderwalze jeweils in entgegengesetzter Richtung verschoben. Die so ausgebildete Antriebsvorrichtung kann beispielsweise mit Vorteil mittig innerhalb oder neben einer langgestreckten Hub-Shuttle-Vorrichtung oder auch zwischen zwei aufeinanderfolgenden taktgekoppelten Transportvorrichtungen dieser oder auch anderer Art angeordnet sein. Die Anordnung der in Längsrichtung zueinander versetzten Steuernuten-Paare mit entgegengesetztem Windungssinn hat dabei den Vorteil, daß die parallel zur Längsmittelachse der Zylinderwalze einwirkenden Komponenten der übertragenen Kräfte entgegengesetzt gerichtet sind und sich somit - zumindest teilweise - aufheben, wodurch z.B. die Axial-Lagerung der Zylinderwalze im Gehäuse entlastet wird.

Die Erfindung ist in der folgenden Beschreibung zweier Ausführungsbeispiele in Verbindung mit der Zeichnung näher erläutert, und zwar zeigt:
- Fig. 1: eine schematisierte perspektivische Ansicht eines ersten Ausführungsbeispiels der in der erfindungsgemäßen Weise ausgebildeten Schrittantriebsvorrichtung mit zwei auf gegenüberliegenden Seiten des Gehäuses längsverschieblich angeordneten Antriebs-Schlitten; und
- Fig. 2: ein in der Darstellungsweise der Figur 1 entsprechendes Ausführungsbeispiel einer erfindungsgemäßen Schrittantriebsvorrichtung mit insgesamt vier, paarweise auf gegenüberliegenden Gehäuse-Seitenwänden längsverschieblich angeordneten Abtriebs-Schlitten.

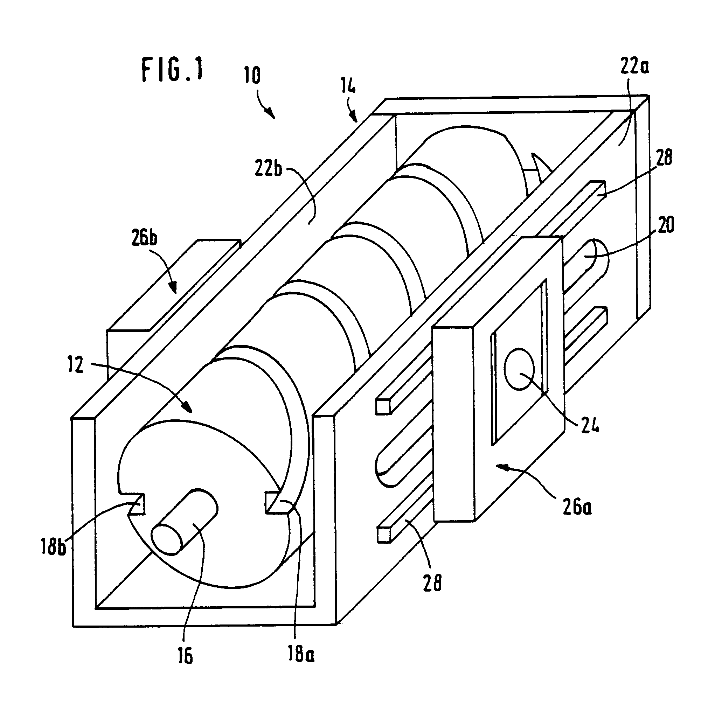

Zu der in Figur 1 gezeigten, in ihrer Gesamtheit mit 10 bezeichneten Schrittantriebsvorrichtung ist darauf hinzuweisen, daß die Darstellung stark schematisiert ist, d.h. daß zur Erleichterung des Verständnisses der Arbeitsweise der Vorrichtung auf die Wiedergabe konstruktiver Einzelheiten verzichtet ist.

Die Schrittantriebsvorrichtung 10 weist eine langgestreckte Zylinderwalze 12 auf, welche drehbar in einem entsprechend bemessenen parallelepipedischen Gehäuse 14 gelagert ist, dessen vordere Stirnwand und obere Deckwand in der Zeichnungsfigur weggelassen sind, um die Anordnung der Zylinderwalze im Gehäuse zu veranschaulichen. Der drehbaren Lagerung der Zylinderwalze 12 in den Stirnwänden dienen in diesen vorgesehene - nicht gezeigte - Lageranordnungen, in denen mittig von den Stirnwänden der Zylinderwalze 12 vortretende Lagerzapfen 16 gelagert sind, von denen in Figur 1 nur der vorn freiliegende Lagerzapfen 16 dargestellt ist. Über diesen Lagerzapfen 16 möge gleichzeitig auch der Antrieb der Zylinderwalze durch einen (nicht gezeigten) Elektromotor mit zwischengeschaltetem Getriebe erfolgen.

In der zylindrischen Umfangsfläche der Zylinderwalze 12 sind um 180° in Umfangsrichtung versetzt zwei Steuernuten 18a, 18b gleicher Steuercharakteristik eingefräst. In diese Steuernuten 18a, 18b greift durch jeweils einen Längsschlitz 20 in jeder der in Figur 1 senkrecht stehenden gegenüberliegenden parallelen Seitenwände 22a, 22b hindurch ein Mitnehmerbolzen 24 ein, der in einem auf der Außenseite der Seitenwände 22a, 22b längsverschieblich geführten Schlitten 26a, 26b gehalten ist.

Der Abtrieb der Schrittantriebsvorrichtung 10 erfolgt über die beiden auf von den Außenflächen der Gehäuse-Seitenwände 22a, 22b vortretenden Führungsleisten 28 geführten Schlitten 26a, 26b an denen - nicht gezeigte - Koppelglieder von nachgeschalteten Getriebemechanismen angeschlossen werden, welche die in der Geschwindigkeits- und Beschleunigungscharakteristik vom Verlauf der Steuernuten 18a, 18b abhängige Schlitten-Längsbewegung auf die anzutreibende Anlage oder Vorrichtung, z.B. eine Hub-Shuttle-Vorrichtung oder einen Scheren-Hubtisch, übertragen.

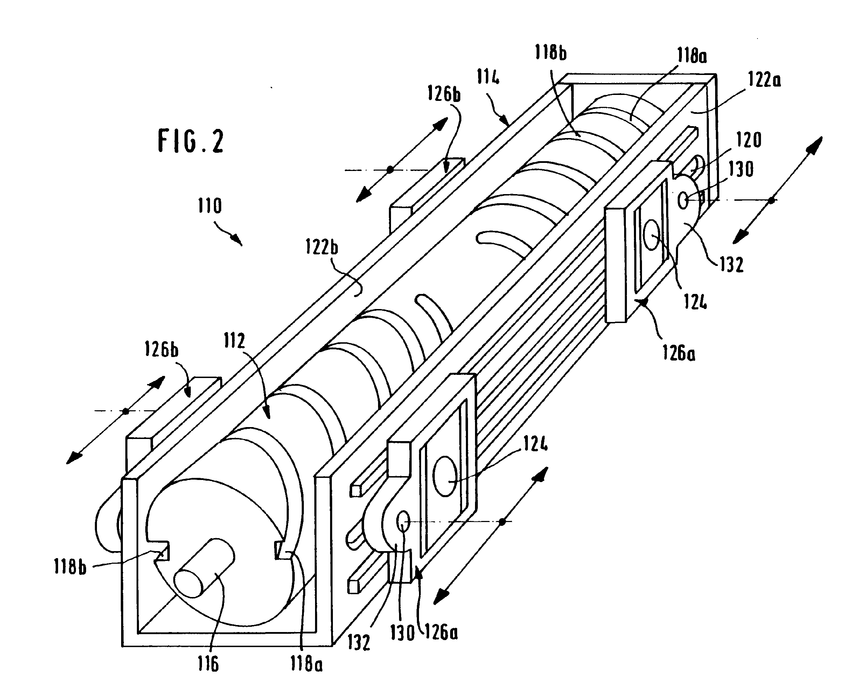

Das in Figur 2 gezeigte Ausführungsbeispiel der erfindungsgemäßen Schrittantriebsvorrichtung stellt eine Weiterbildung der vorstehend beschriebenen Schrittantriebsvorrichtung 10 dar und stimmt im grundsätzlichen Aufbau und der Funktion mit dieser überein, so daß nachfolgend nur die gegenüber der Schrittantriebsvorrichtung 10 getroffenen Abänderungen bzw. Weiterbildungen beschrieben werden, während für die übereinstimmende Ausgestaltung auf die vorausgehende Beschreibung der Figur 1 verwiesen werden kann, zumal gleichen Teilen der beiden Vorrichtungen in der Zeichnung gleiche Bezugszeichen, jedoch mit vorangestellter "1" im Fall der in Figur 2 gezeigten Vorrichtung zugeordnet sind.

In Figur 2 ist ersichtlich, daß die Zylinderwalze 112 und dementsprechend auch das Gehäuse 114 der Schrittantriebsvorrichtung 110 länger als die entsprechenden Bauteile der Schrittantriebsvorrichtung 10 bemessen sind, und daß anstelle des um 180° versetzten Steuernuten-Paares 18a, 18b zwei in Längsrichtung versetzte Steuernuten-Paare 118a, 118b in die Umfangsfläche der Zylinderwalze 112 eingefräst sind. Jedem der Steuernuten-Paare 118a, 118b ist jeweils ein Paar von Abtriebs-Schlitten 126a, 126b zugeordnet, so daß im Fall der Schrittantriebsvorrichtung 110 die über den angetriebenen Lagerzapfen 116 eingeleitete Antriebsleistung auf die erwähnten vier Abtriebs-Schlitten 126a, 126b verteilt wird. Die Schrittantriebsvorrichtung 110 ist deshalb grundsätzlich für die Übertragung noch höherer Abtriebsleistungen als die Schrittantriebsvorrichtung 10 geeignet. Gegenüber der Verwendung von vier Einzelantrieben mit jeweils einem Abtriebs-Schlitten wird durch diese Ausgestaltung natürlich eine weitere Platzersparnis erzielt.

In Figur 2 ist erkennbar, daß im speziell dargestellten Fall der Windungssin des in der Zeichnung vorn unter dargestellten Steuernuten-Paares 118a, 118b dem Windungssinn des zweiten Steuernuten-Paares 118a, 118b entgegengesetzt ist, so daß die jeweils zugehörigen Schlitten-Paare 126a, 126b bei angetriebener Zylinderwalze 112 gegensinnige Längs- bzw. Hubbewegungen ausführen, wodurch eine Entlastung der Lagerung der Zylinderwalze von Axialkräften erreicht wird.

An den Schlitten 126a, 126b sind jeweils mit einer Bohrung 130 versehene Laschen 132 vorgesehen, an denen die Koppelglieder für nachgeschaltete Getriebemechanismen angeschlossen werden.

## Patentansprüche

1. Schrittantriebsvorrichtung (10; 110) für den Antrieb von längsverschieblichen Schlitten nach einem vorgegebenen Bewegungsgesetz mit einem dem jeweiligen Schlitten benachbart und mit ihrer Längsmittelachse parallel zur Schlitten-Vorschubrichtung ortsfest, jedoch motorisch drehantreibbar gehaltenen langgestreckten Zylinderwalze (12; 112), in deren zylindrischer Umfangsfläche eine Steuernut mit einem dem gewünschten Bewegungsgesetz des Schlittens entsprechenden Windungsverlauf eingearbeitet ist, in welche das freie Ende eines vom Schlitten zur Zylinderwalze (12; 112) vorstehenden Mitnehmerbolzens (24) passend eingreift,
**dadurch gekennzeichnet**
daß die Zylinderwalze (12; 112) in einem langgestreckten Gehäuse (14; 114) mit wenigstens zwei auf diametral gegenüberliegenden Seiten der Zylinderwalze angeordneten parallelen Seitenwänden (22a, 22b;122a, 122b) drehbar und auf jeder der beiden parallelen Seitenwände jeweils wenigstens ein Schlitten (26a, 26b; 126a, 126b) längsverschieblich geführt gelagert ist,
daß in die zylindrische Umfangsfläche der Zylinderwalze (12; 112) in um 180° in Umfangsrichtung versetzter Anordnung wenigstens zwei jeweils einem Schlitten (26a, 26b; 126a, 126b) zugeordnete Steuernuten (18a, 18b; 118a, 118b) gleichen Verlaufs eingearbeitet sind,
daß an jedem der Schlitten (26a, 26b; 126a, 126b) ein zur Zylinderwalze (12; 112) vorstehender und mit seinem freien Ende in die jeweils zugeordnete Steuernut eingreifender Mitnehmerbolzen (24; 124) angeordnet ist, und
daß in jeder Seitenwand (22a, 22b; 122a, 122b) parallel zur Längsmittelachse der Zylinderwalze (12; 112) ein durchgehender Längsschlitz (20; 120) mit einer wenigstens den Durchmesser des Mitnehmerbolzens (24; 124) entsprechenden Breite vorgesehen ist, wobei die Längsmittelachse der Zylinderwalze (12; 112) und die Längsmittelachsen der in den gegenüberliegenden Gehäuse-Seitenwänden vorgesehenen Längsschlitze (20; 120) in einer Ebene liegen, die ihrerseits rechtwinklig zu den Seitenwänden (22a, 22b; 122a, 122b) verläuft.

2. Schrittantriebsvorrichtung nach Anspruch 1, dadurch gekennzeichnet, daß die Zylinderwalze (112) in Längsrichtung versetzt mit jeweils einem Paar von in Umfangsrichtung um 180° versetzt eingearbeiteten Steuernuten (118a, 118b) gleichen Windungsverlaufs versehen ist, und daß auf jeder der beiden gegenüberliegenden Gehäuse-Seitenwänden (122a, 122b) zwei jeweils einer der in Längsrichtung versetzten Steuernuten (118a, 118b) zugeordnete Schlitten (126a, 126b) längsverschieblich geführt gelagert sind.

3. Schrittantriebsvorrichtung nach Anspruch 2, dadurch gekennzeichnet, daß die in Längsrichtung versetzten Paare von ihrerseits jeweils um 180° in Umfangsrichtung versetzt in die Zylinderwalze (112) eingearbeiteten Steuernuten (118a, 118b) jeweils entgegengesetzten Windungssinn haben.

## Claims

1. Stepping driver (10; 110) for driving longitudinally displaceable blocks according to a given law of motion, having an elongated cylinder (12; 112) mounted adjacent to the blocks and fixed with its longitudinal central axis parallel to the direction of block movement, but mounted so as to be motor driven, in whose cylindrical periphery a cam groove is cut in a winding configuration corresponding to the desired law of motion of the blocks, the groove being engaged by the free end of a cam follower pin (24) projecting from the block toward the cylinder (12; 112), characterized by the fact that the cylinder (12; 112) is mounted in an elongated housing (14; 114) with at least two parallel side walls (22a, 22b; 122a, 122b) disposed on diametrically opposite sides of the cylinder and on each of the two parallel side walls at least one blocks (26a, 26b; 126a, 126b) is mounted for guided longitudinal displacement,
that at least two cam grooves (18a, 18b; 118a, 118b) of the same configuration associated each with one block (26a, 26b, 126a, 126b) are made in the cylindrical circumferential surface of the cylinder (12; 112) in an arrangement offset circumferentially by 180°,
that on each of the blocks (26a, 26b; 126a, 126b) there is disposed a cam follower pin (24; 124) projecting from the cylinder (12; 112) and engaging with its free end the cam groove associated with each,
that in each side wall (22a, 22b; 122a, 122b), parallel to the longitudinal central axis of the cylinder (12; 112) a through-going longitudinal slot (20; 120) of a width corresponding at least to the diameter of the cam follower pin (24; 124) is provided, the longitudinal central axis of the cylinder (12; 112) and the longitudinal central axes of the longitudinal slots (20; 120) provided in the opposite housing side wall lie in a plane which in turn is at right angles to the side walls (22a, 22b; 122a, 122b).

2. Stepping driver according to claim 1, characterized in that the cylinder (112) is provided longitudinally offset with a pair of cam grooves (118a, 118b) of the same chirality each offset circumferentially by 180° from the other, and that on each of the two opposite housing side walls (122a, 122b) two blocks (126a, 126b) associated each with one of the came grooves (118a, 118b) offset in the longitudinal direction are mounted for guided longitudinal displacement.

3. Stepping driver according to claim 2, characterized in that the longitudinally offset pairs of cam grooves (118a, 118b) created in the cylinder (112) and offset circumferentially in turn by 180° have opposite chirality.

## Revendications

1. Dispositif d'entraînement pas à pas (10; 110) pour entraîner des chariots déplaçables longitudinalement selon une loi de déplacement prédéterminée, avec un rouleau cylindrique allongé (12; 112) voisin du chariot spécifique, et maintenu localement fixe avec son axe médian longitudinal parallèle à la direction d'avance du chariot, tout en étant susceptible d'être entraîné en rotation par un moteur et dans la surface périphérique cylindrique duquel est usinée une rainure de commande, avec une allure d'enroulement correspondant à la loi de déplacement souhaitée du chariot et dans laquelle l'extrémité libre. d'un tourillon d'entraînement (24) faisant saillie du chariot, en direction du rouleau cylindrique (12; 112), s'engage de façon ajustée, caractérisé en ce que le rouleau cylindrique (12; 112) tourillonne dans un carter (14; 114) allongé, avec au moins deux parois latérales (22a, 22b; 122a, 122b) parallèles disposées sur les deux côtés diamétralement opposés du rouleau cylindrique et sur chacune des deux parois latérales parallèles au moins un chariot (26a, 26b; 126a, 126b) est monté en étant guidé dans la direction longitudinale,
en ce que, dans la surface périphérique cylindrique du rouleau cylindrique (12; 112), sont usinées, selon un agencement décalé de 180° dans la direction circonférentielle, au moins deux rainures de commande (18a, 18b; 118a, 118b) associées chacune à un chariot (26a, 26b; 126a, 126b) et d'allure identique,
en ce que, sur chacun des chariots (26a, 26b; 126a, 126b), est disposé un tourillon d'entraînement (24; 124) faisant saillie en direction du rouleau cylindrique (12; 112) et s'engageant, chacun par son extrémité libre, dans la rainure de commande associée, et
en ce que, dans chaque paroi latérale (22a, 22b; 122a, 122b), est prévue, parallèlement à l'axe médian longitudinal du rouleau cylindrique (12; 112), une fente longitudinale (20; 120) continue avec une largeur correspondant au moins au diamètre du tourillon d'entraînement (24; 124), l'axe médian longitudinal du rouleau cylindrique (12; 112) et les axes médians longitudinaux des fentes allongées (20, 120) prévues dans les parois latérales de carter opposées sont situées dans un plan s'étendant de son côté perpendiculairement aux parois latérales (22a, 22b; 112a, 122b).

2. Dispositif d'entraînement pas à pas selon la revendication 1, caractérisé en ce que le rouleau cylindrique (112) est pourvu, de façon décalée en direction longitudinale, de rainures de commande (118a, 118b) usinées et décalées de 180° dans la direction circonférentielle en formant chaque fois un couple, et présentant une allure d'enroulement identique, et en ce que, sur chacune des deux parois latérales de carter (122a, 122b) opposées, est monté à rotation, en étant guidé longitudinalement, l'un des chariots (126a, 126b) associé aux rainures de commande (118a, 118b) décalées dans la direction longitudinale.

3. Dispositif d'entraînement pas à pas selon la revendication 2, caractérisé en ce que les couples, décalés en direction longitudinale, de rainures de commande (118a, 118b) usinées dans le rouleau cylindrique (112), en étant de leur côté chacune décalée de 180° dans la direction circonférentielle, présentent chacun des sens d'enroulement opposés.
